# EUROPEAN PATENT APPLICATION

(11) **EP 2 275 330 A1**
(43) Date of publication of application: **19.01.2011**
(21) Application number: 09350005.6
(22) Date of filing: 15.07.2009
(51) Int. Cl.: B62J 6/06, B62M 3/00

(54) **Generator for electric bicycle**

(71) Applicant: Torubarov, Igor, Saint-Petersburg (RU)
(72) Inventor: Torubarov, Igor, Saint-Petersburg (RU)
(74) Representative: Tournel, Jean Louis

(57) **Abstract**

Electric generator designed to be set up on a bicycle or any other electrically assisted vehicle, in replacement of the said vehicle's existing bottom bracket. It converts the pedaling energy deployed by the operator into electric power while offering optimum weight, performance and bulk.The said device comprises :
- a mechanical gear reduction set (1) driven by the bottom bracket's slow axle (3), with at its end a fast axle (4) fast enough to operate the generator (2) at an optimum performance level. This gear reduction set replaces the left side of a regular bottom bracket. ;
a generator (2) that replaces the right side of a regular bottom bracket. It is driven by a fast axle (9) fastened to the gear reduction set by matching indented ends.

This invention allows for the conversion of any bicycle and/or any vehicle fitted with a mechanical transmission system and a bottom bracket - and more generally any device fitted with a bottom bracket and pedals - into an electric generator without any changes to the existing frame of the said vehicle and/or device.

## Description

This invention pertains to an electric generator installed on a bicycle - or any other electrically assisted vehicle - that converts the energy obtained through its operator's pedaling motion into electricity.

### TECHNICAL FIELD OF THE INVENTION

The afore mentioned invention pertains to the field of electric bicycles, or any other electrically assisted vehicle, in which all or part of the motive power derives from the pedaling of its operator, additional energy may derive from a battery operated motor.

### PRIOR ART

In most electrically assisted vehicles, the energy derived from pedaling is mechanically transferred to one of the vehicle wheels through some sort of transmission system such as a chain, belt or cardan shaft.

Moreover there are various generating systems that convert the mechanical force of a spinning crankset into electric power.

For example a permanent magnets generator may be attached to the axle of the bottom bracket and driven by its rotation thus producing electricity.

Generally speaking though, these electricity generation devices are not built into mobile vehicles operated by humans such as an electric bicycle. Indeed they involve various downsides that make them less practical than a mechanical transmission.

For the benefit of the reader measurable factual data will be provided further in the document. It is understood that all and any such data are only provided as examples to enhance the reader's experience but are in no way whatsoever part of the invention - this is true for any measurable factual data concerning mechanical, electrical, or any and all other features of the invention.

First of all it seems appropriate to mention that as a rule of thumb a human being produces a mechanical power ranging anywhere from 150 W up to approximately 500 Watts when pedaling. The bottom bracket's rotary speed can go up to about 120 rotations per minute.

An electrical generator (for example a permanent magnet one) with a fair output in this performance range will often be heavy and/or bulky, making it illsuited for an electrically assisted vehicle - such as an electric bicycle - that must remain light-weight.

To achieve an acceptable weight and bulk for the afore mentioned performance range, one needs to add a gear reduction set to the generator that will multiply the rotary speed of the bottom bracket prior to input into the generator (usually by a factor of 5 to 15).

Such generating systems are very common nowadays. A 250 W brushless generator fitted with permanent magnets will generally weigh anywhere from 3 to 5 kg and may be enclosed in a 10 cm radius / 10 cm high cylinder, it usually yields an 80% output.

The weight / performance / bulk characteristics of these generators would make them well suited to be used in an electrically assisted vehicle. Currently however these systems cannot be fitted into pre-existing electrically assisted vehicles for the reasons that follow:

On most of electrically assisted vehicles and more specifically on electric bicycles, a radius cylindrical hole (about 2 cm radius) is pierced through the vehicle's frame so as to make way for the axle of the bottom bracket. The bottom bracket itself is attached to the frame through the cylindrical hole and an internal thread.

Thus short from overhauling the build of the vehicle's frame and replacing its bottom bracket with a 10 cm radius / 10 cm high cylindrical generator, there seems to be no way to convert a pre-existing bicycle. Indeed and as described in the previous paragraph the axle of the generator and the axle of the vehicle must be one. This means a custom frame would need to be built to fit the said generator in the vehicle.

A solution could perhaps be to install the cylindrical generator next to the existing bottom bracket rather than in its place, say on the right or left hand side of the bottom bracket's axle and screw one of the generator's ends to the cylindrical hole that cuts through the vehicle's frame.

However such a solution has at least two downsides:

The approximately 10 cm long cylindrical generator would keep by at least that much the cyclist's right (or left) leg apart from the bicycle's frame leading to a unbalanced pedaling neither conformable nor efficient - usually on a bike there is no more than 5 cm of spacing between a bicycle's wheels vertical area and the internal rotation area of the pedals.

The 3 to 5 kg generator fitted on the side would destabilize the vehicle; this is even more of concern if the said vehicle happens to be a bicycle.

### SUMMARY OF THE INVENTION

The goal of this invention is to address the issues arising from the substitution of the bottom bracket by a generator and a gear reduction set - offering optimum weight, performance and output - on an electric bicycle or any other electrically assisted vehicle's.

This goal is achieved by the device of claim 1 that can be fitted to any vehicle in which all or part of the motive power derives from pedaling, and in particular to a bicycle, and by the electrically assisted vehicle defined in claim 14.

A generating system is built for that purpose; it comprises two sections.

The first section - the mechanical section - is composed of a gear reduction set suitable to convert the rotary speed of pedaling in a bicycle or any other vehicle (approximately 100 rotations per minute) into an appropriate rotary speed for the given generator (around 500 rotations per minute at least).

This first section is fastened and preferably screwed to the left side of the vehicle's frame, just like the left side of a regular bottom bracket would be. The bottom bracket's slow axle goes through this first section, then into the frame's cylindrical hole, then into the second section of the system - which will be further described below - without funneling any rotary motion to the said second section of the system.

The fast axle that outputs on the right of this first section is composed of a hollowed cylinder inside which the bottom bracket's slow axle rotates freely.

The outer rim of the epicyclical train is screwed onto a lid fitted with a thread around its axle so as to be able to screw that section of the system to the bicycle's bottom bracket.

The second section - the electrical section - is composed of a generator offering optimum weight, performance, output and bulk for the given purpose. (In the selected assembly mode such specifications have been described in paragraphs [0007] up to [0010]).

This generator is fastened, and preferably screwed to the right side of the vehicle's frame or bottom bracket, just like the right side of a regular bottom bracket would. The bottom bracket's slow axle is not sealed to it but rather rotates freely in it.

The system is built so that the generator is powered by the fast axle that outputs from the epicyclical gear reduction set.

In the mechanical section the fast axle is composed of a hollowed cylinder inside which the bottom bracket's slow axle rotates frictionlessly. At the end of this cylinder there are three identical symmetrical notches in such a way that half of the axle's brim is indented.

In the electrical section the fast axle is composed of a cylinder of equal diameter with three mirrored indentures on its brim so that both halves of the accelerated axle of both sections fit into each other perfectly well.

Therefore when both halves of the accelerated axle are assembled and both right and left sections of the system are set up, the rotary motion of the accelerated axle outputted by the gear reduction set on the left side is transferred to the generator on the right side without any loss.

Moreover since the indentures are about 2 cm high on each side, the system offers a 4 cm leeway over the length of the cylindrical hole that cuts through the vehicle's frame, twice the height of the indentures.

In practical terms the system can thus be fitted into any bicycle or vehicle where the cylindrical hole that accommodates the bottom bracket matches in both diameter and size the thread on both left and right side sections of the system. This is true regardless of the length of the longitudinal axis of the cylindrical hole that cuts through the vehicle's frame (with a leeway of twice the height of the indentures over that width).

The gear reduction system (left section) is enclosed in a cylinder measuring about half the size of that of a regular one-piece generator that would share identical electrical features than the one described in the invention. Therefore it doesn't interfere with the pedaling motion of the rider's left leg. (In the selected assembly mode the left section is contained in a 11 cm radius and less than 5 cm high cylinder).

The generating system (left section) is enclosed in a cylinder measuring about half the size of that of a regular one-piece generator that would share identical electrical features than the one described in the invention. Therefore it doesn't interfere with the pedaling motion of the rider's right leg. (In the selected assembly mode the right section is contained in a 11 cm radius and less than 5 cm high cylinder).

The resulting pedaling motion is efficient, balanced and comfortable.

It is also possible to build the system so that both left and right sections share a similar weight. Thus the electric vehicle would in no way be unbalanced.

This invention may also in some assembly modes sense the pedaling motion. Indeed any rotation of the pedals leads to the rotation of the generator and this is in itself detectable by several methods as per the state of the art. Such rotation may for instance be detected by a differential Hall sensor that would monitor the magnets motion or else by analyzing the electrical current outputted by the three-phase generator, as per the state of the art.

This pedaling sensor could be managed by an electronic device (which is not part of this invention), and could be used to build 'intelligent' vehicles that would automatically cease any electric assistance as soon as the operator stops pedaling.

In some assembly modes this invention may also be used to meter the power produced by the operator since it matches the power produced by the generator which in turn can easily be tracked, as per the state of the art.

### BRIEF DESCRIPTION OF THE DRAWINGS

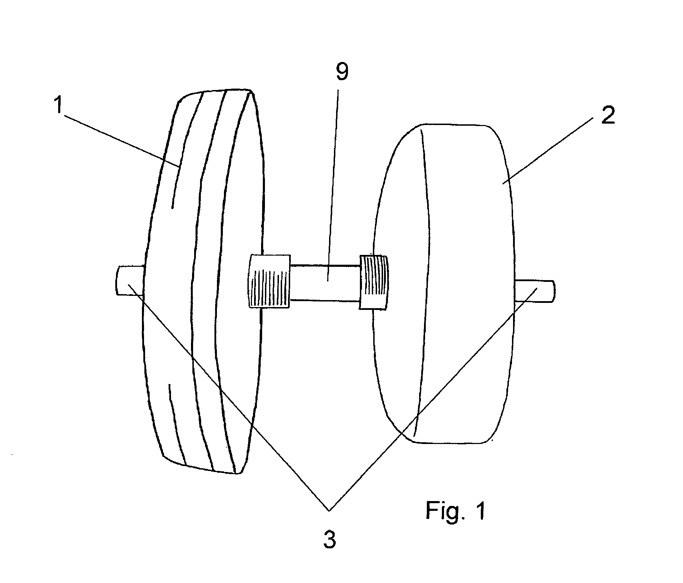

Figure 1 is a view of the system as it could be installed on a bicycle or any other pre-existing vehicle, to replace the regular bottom bracket.

Figure 2 is a view of the open left section (epicyclical gear reduction set). Two notches (12) at the end of the fast axle (4) out of three are visible on that view, the third one is hidden by the slow axle (3).

Figure 3 is a view of the left side section closed, depicting the required screw thread (7) to fit the said left side section in the hole where the regular bottom bracket usually goes. Two notches (12) at the end of the fast axle (4) out of three are visible on that view, the third one is hidden by the slow axle (3).

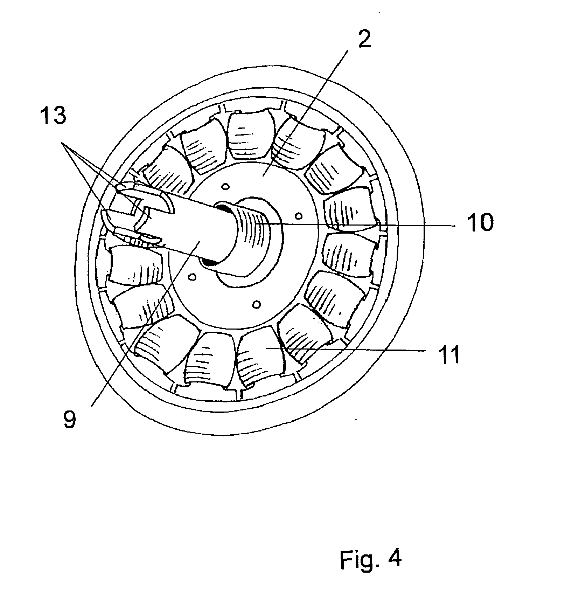

Figure 4 is a view of the right side section (the generator), with all three notches (13) at the end of the fast axle (9).

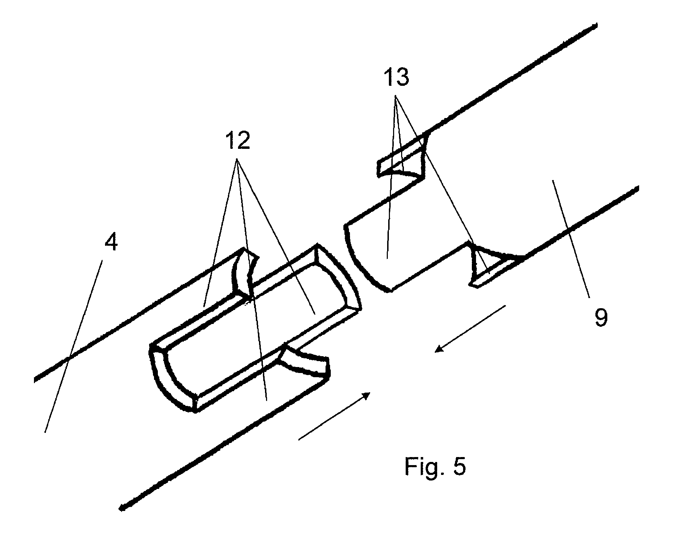

Figure 5 is a zoom on the extremity of the half-fast axle (4) and on the extremity of the half-fast axle (9), showing notches (12) and (13). It shows how, when both halves (4,9) of the accelerated axle are assembled and both right and left sections of the system are set up, the rotary motion of the accelerated axle outputted by the gear reduction set on the left side is transferred to the generator on the right side without any loss of rotation, nor friction.

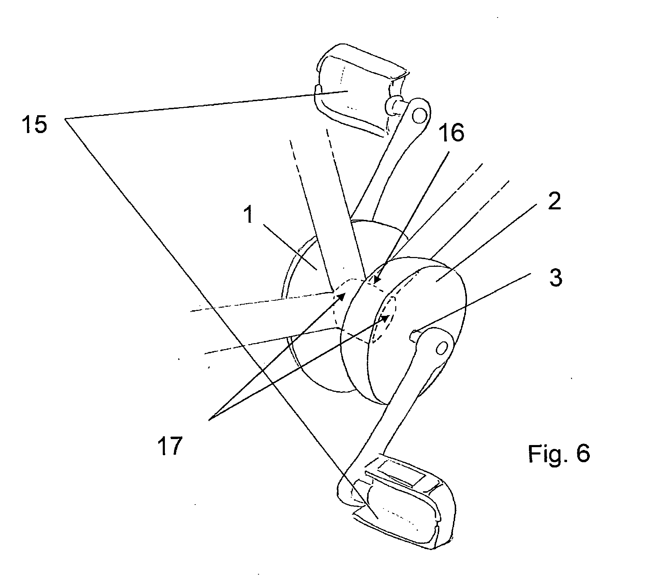

Figure 6 is an external view of the system mounted on a bicycle's frame, in replacement of the original bottom bracket. Two pedals (15) are attached through their arms to the system and drive the slow axle (3). On each side of the bicycle's frame, modules (1) and (2) are screwed into the internal threads (17) of the cylindrical hole (16, represented with dashed lines) which goes through the vehicle frame.

### DETAILED DESCRIPTION OF ONE PARTICULAR EMBODIMENT

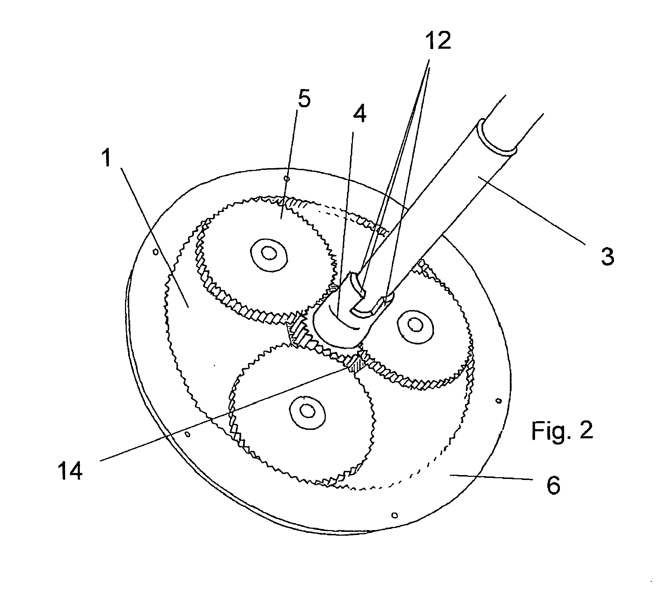

In reference to the particular embodiment of figure 2, the device comprises a mechanical module (1) comprising an epicyclical simple train gear reduction set, for example with a 10 ratio in which the outer rim (6) has for example a radius of 10 cm.

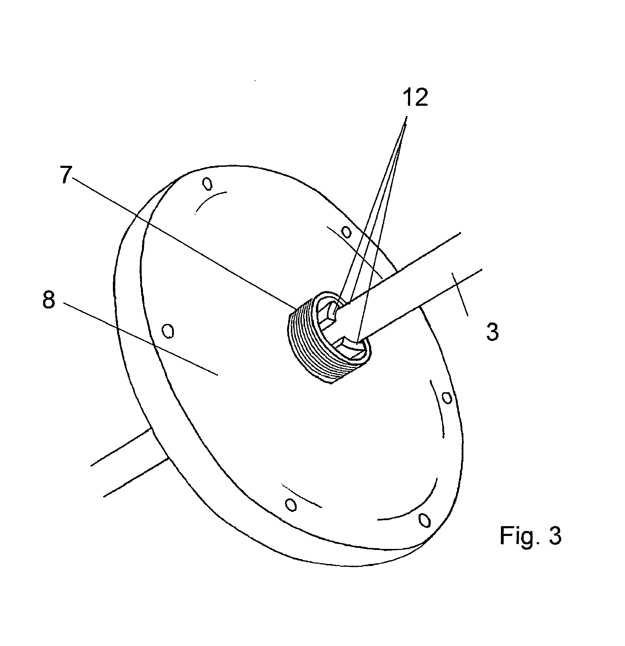

Referring to figure 3, a lid (8) is screwed on the outer rim of the gear reduction set. A thread (7) is visible at the end of the set - towards the inside of the vehicle frame- this thread matches in both diameter and size the cylindrical hole in which the regular bottom bracket is usually fitted.

The device of the invention can be mounted on any vehicle which comprises a pedaling assembly, including a pedal's "slow" axle (3), which drives the planet carrier (14). This pedal's slow axle (3) has for example an approximate diameter of 1 cm and goes through the epicyclical gear train, as depicted on illustration 1.

The fast axle (4) of the mechanical section (1) is made of a hollowed cylinder, for example having a diameter of 2.5 cm, with a triple indentation at its end - the notches (12) are for example 2 cm high. This fast axle (4) and the slow axle (3) are coaxial.

The pedal's slow axle (3) drives the epicyclical gear train and can rotate freely inside the fast axle (4), driven by the epicyclical gear train at a higher speed.

Apart from the two axles that go through the epicyclical gear train and the thread required for its fastening onto the cylindrical hole where the regular bottom bracket usually goes, the train fits inside a cylinder having for example a 5 cm high / 11 cm radius, taking into account the state of the art such measurements are easy to achieve.

The right side electrical section is a brushless permanent magnet three-phase generator, in which the stator (11) is for example composed of twenty coils.

The frame in which the stator (11) is enclosed has a thread (10) on its inner end which, both its diameter and size match the cylindrical hole where the regular bottom bracket of the bicycle or vehicle is usually fitted.

Apart from the two axles that go through the generator and the thread required for its fastening onto the cylindrical hole where the regular bottom bracket usually goes, the generator fits inside a cylinder for example of 5 cm high and 11 cm radius, taking into account the state of the art such measurements are easy to achieve.

The fast axle (9) in the electrical section (2) is composed of a hollowed cylinder for example having a diameter of 2.5 cm, with a triple indentation at its end - the notches (13) are for example 2 cm high. These notches exactly match (mirror) the notches (12) on the fast axle (4) of section (1).

Thanks to the inner threading on both sections of the system, left and right halves are screwed on each side of the cylindrical hole where a regular bottom bracket is usually fitted.

Thanks to the indentures (12, 13) on both ends of the fast axles (4,9), which exactly mirror each other, when the system is set up, the left half of the fast axle (4) - which is a hollowed cylinder - fits perfectly well into the right half (9). Thus the rotary motion outputted by the gear reduction set is transferred to the generator without any loss.

Moreover and much as for a regular bottom bracket, the slow axle extremities are framed so as to accommodate the pedals.

In operation, the slow rotary axle (3) is driven in rotation by the pedaling energy of an operator. This slow rotary axle (3) drives in rotation the output of the gear reduction set (4). The fast half-axles (4,9) are thus driven in rotation at higher speed by the gear reduction set (1), and the generator (in module 2) is thus driven in rotation at said higher speed.

## Claims

1. A device that can be fitted to any vehicle in which all or part of the motive power derives from pedaling, and in particular to any bicycle, in order to convert the pedaling energy into electric power, said vehicle comprising a frame through which a cylindrical hole is pierced that accommodates a bottom bracket, said bottom bracket being fastened to the frame through the said cylindrical hole, wherein said device is designed to be fitted into the said cylindrical hole once the bottom bracket has been removed without any other modification to the frame.

2. The device of claim 1, wherein the cylindrical hole comprises an internal thread inside each extremity of the hole, and wherein the device is designed to be screwed to the vehicle's frame at both extremities of the said hole.

3. The device of claim 1 or 2 wherein the said device comprises two separate modules: a mechanical gear reduction set, that can be fastened on one side of the said cylindrical hole of the vehicle's frame, and an electrical generator that can be fastened on the other side of the cylindrical hole of the vehicle's frame, in lieu and place of the regular bottom bracket of the vehicle, wherein the said device comprises a so-called slow axle, driven into rotation by the pedaling of the operator, wherein the mechanical gear reduction set is driven by the said slow rotary axle, wherein the said device comprises a so-called fast axle, driven by the said mechanical gear reduction set at a rotation speed that is higher than the rotation speed of the slow axle, and wherein the electrical generator is driven by said fast axle.

4. The device of claims 2 and 3, wherein the mechanical gear reduction set is designed to be screwed into one of the said internal threads of the cylindrical hole, and the electrical generator is designed to be screwed into the other internal thread of the cylindrical hole.

5. The device of claim 3 or claim 4 wherein the mechanical gear reduction set comprises an epicyclical simple train gear reduction set.

6. The device of any one of claims 3 to 5, wherein the slow and fast axles are co-axial and rotate freely at different rotating speeds without friction.

7. The device of claim 6, wherein the fast axle is suitable to be located inside the cylindrical hole of the vehicle's frame.

8. The device of claim 6 or claim 7, wherein the rotation axis of the slow and fast axles is the longitudinal axis of the said cylindrical hole, once the device is fitted to the vehicle's frame.

9. The device of any one of claims 3 to 8, wherein the said fast axle is made of two half-axles, one half-axle driven by the mechanical gear reduction set and one half-axle driving the generator, wherein each half-axle comprises coupling means at its extremity for assembling the two half-axles together and forming the said fast axle once the system is setup.

10. The device of claim 9, wherein the coupling means of each half-axle comprise indentures, and wherein the indentures of the two half-axles perfectly fit into each other so that any rotation of the said first half-axle is totally transferred to the said second half-axle driving the generator once the indentures are in place and the system is set up.

11. The device of claim 10, wherein the indentures at the extremity of each of the said half-axles are notches with a certain height (h), in such a way that the rotation of the first half-axle will be totally transmitted to the second half-axle, driving the generator with a leeway of 2 x h (2 multiplied by h) over the length of the longitudinal axis of the said cylindrical hole that pierces the vehicle frame and contains the two half-axles.

12. The device of any one of claims 1 to 11 suitable to be used as a pedaling sensor.

13. The device of any one of claims 1 to 12, suitable to be used for metering the power inputted by the pedaling operator.

14. An electrically assisted vehicle in which all or part of the motive power derives from pedaling, and in particular a bicycle, said vehicle being fitted with a device of any one of claims 1 to 13
